# EUROPEAN PATENT APPLICATION

(11) **EP 4 310 862 A1**
(43) Date of publication of application: **24.01.2024**
(21) Application number: 21931827.6
(22) Date of filing: 17.11.2021
(51) Int. Cl.: G21F 9/06, C02F 1/32, C02F 1/66, C02F 1/72, B01D 35/02, C02F 1/42, C02F 1/70, G21D 1/00, G21F 9/00

(54) **FACILITIES FOR WASTE LIQUID TREATMENT**

(30) Priority: 18.03.2021 KR 20210035406
(71) Applicant: Korea Hydro & Nuclear Power Co., Ltd, 38120 Gyeongsangbuk-do (KR)
(72) Inventor: KIM, Chorong, Daejeon 34014 (KR); KIM, Hak Soo, Sejong 30146 (KR); CHOI, Jinsoo, Daejeon 34090 (KR); LEE, Kyung Hee, Daejeon 34186 (KR); LEE, Sang-Ho, Sejong 30150 (KR)
(74) Representative: Berggren Oy
(86) International application number: PCT/KR2021/016915
(87) International publication number: WO 2022/196886

(57) **Abstract**

A waste liquid treatment facility according to an exemplary embodiment of the present invention includes: a filter connected to a system of a nuclear power plant; a demineralizer connected to the filter; a reactor connected to the demineralizer and including a first lamp and a second lamp of different wavelengths connected in succession; a buffer tank connected to the filter, demineralizer, and reactor; and a circulation pipe portion connecting the filter, demineralizer, reactor, and buffer tank to form a circulation structure of a solution together with the system, wherein the solution sequentially passes through the first lamp and the second lamp.

## Description

### [Technical Field]

The present invention relates to a waste liquid treatment facility, and more particularly, to a waste liquid treatment facility for treating waste liquid occurring during dismantling of a nuclear power plant.

### [Background Art]

A nuclear power plant generates heat by artificially controlling a chain reaction of fission of fissile materials in a nuclear reactor.

A nuclear power plant includes a system having many individual functions based on a nuclear reactor, such as a reactor coolant system (reactor pressure vessel, steam generator, pressurizer, main piping, etc.), chemical and volume control system, residual heat removal system, and the like.

Radioactive materials exist in these systems, and workers may be exposed to radiation emitted from these materials.

Therefore, in order to reduce radiation exposure of workers during permanent shutdown of nuclear power plants or replacement of parts, chemical decontamination is performed and waste liquid occurs accordingly.

This waste liquid contains a number of heavy metals and radioactive materials, and should be discharged in a safe state after various treatment processes are performed thereon.

### [Disclosure]

### [Technical Problem]

Accordingly, the present invention provides a waste liquid treatment facility capable of safely and easily treating waste liquid occurring from chemical decontamination.

### [Technical Solution]

A waste liquid treatment facility according to an exemplary embodiment of the present invention includes: a filter connected to a system of a nuclear power plant; a demineralizer connected to the filter; a reactor connected to the filter and including a first lamp and a second lamp of different wavelengths connected in succession; a buffer tank connected to the filter, demineralizer, and reactor; and a circulation pipe portion connecting the filter, demineralizer, reactor, and buffer tank to form a circulation structure of a solution together with the system, wherein the solution sequentially passes through the first lamp and the second lamp.

The solution around the first lamp may maintain a first temperature, and the solution around the second lamp may maintain a second temperature higher than the first temperature.

The first temperature may be 40 °C to 60 °C, and the second temperature may be 90 °C.

The first lamp may emit a wavelength of 180 nm to 280 nm, and the second lamp may emit a wavelength of 280 nm to 500 nm.

The reactor may include: a first reactor including the first lamp, and a second reactor including the second lamp.

The reactor may be installed in plurality.

The waste liquid treatment facility may further include a cooling device connected to the reactor

A length of the first lamp and a length of the second lamp may be different from each other.

The circulation pipe portion may include: a first circulation pipe connecting the system to the filter; a second circulation pipe connecting the filter to the demineralizer; a third circulation pipe connecting the filter to the reactor; a fourth circulation pipe connecting each of the filter, demineralizer, and reactor to the buffer tank; and a fifth circulation pipe connecting the buffer tank to the system.

The first lamp may be located to be relatively adjacent to the third circulation pipe, and the second lamp may be located to be relatively adjacent to the fourth circulation pipe.

The waste liquid supplied to the reactor may have pH 3 or less, 60 °C or less, a 2mM of Fe concentration or less, and a 20mM to 25mM of hydrogen peroxide concentration.

### [Advantageous Effects]

According to an embodiment of the present invention, radiation exposure of workers during dismantling work may be minimized by chemically and easily decontaminating the system before dismantling the nuclear power plant to remove radioactive materials.

### [Description of the Drawings]

FIGS. 1 and 2 are diagrams illustrating arrangement of lamps inside a UV reactor according to an embodiment of the present invention.
FIGS. 3 and 4 are diagrams illustrating arrangement of lamps inside a UV reactor according to another embodiment of the present invention.
FIG. 5 is a schematic configuration diagram of a waste liquid treatment facility according to an embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

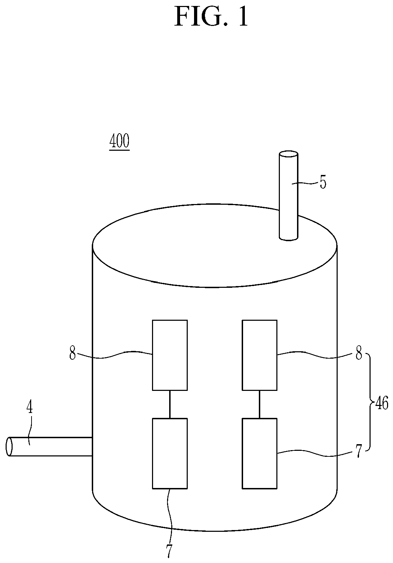

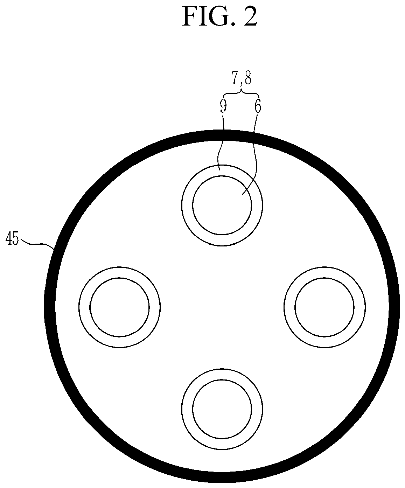

FIGS. 1 and 2 are diagrams illustrating arrangement of lamps inside a UV reactor according to an embodiment of the present invention.

As shown in FIGS. 1 and 2, a UV reactor 40 according to an embodiment of the present invention includes a reaction chamber 45 and a UV lamp 46 installed inside the reaction chamber 45.

The reaction chamber 45 provides an enclosed space in which a fluid is introduced and a reaction takes place. The reaction chamber 45 includes an inlet 4 and an outlet 5 through which a reaction fluid is introduced and discharged.

When a solution is supplied into the reactor 40 from the top of the reactor 40, an empty space may be formed at the top of the reactor 40 and reaction efficiency may decrease, and thus, the inlet 4 is located in a lower portion or a lower side of the reaction chamber 45, and the outlet 5 is located in an upper portion or an upper side of the reaction chamber 45. Thus, the fluid may be introduced into the lower portion or lower side of the reaction chamber 45 and discharged to the upper portion or upper side after a reaction.

Gas may be generated according to a chemical reaction in the reaction chamber 45, and the gas may be discharged through an exhaust pipe (not shown) installed above the reaction chamber 45.

For example, UV generated from a UV lamp may photodecompose an organic acid in a solution, and at this time, carbon dioxide gas and water may be generated, and carbon dioxide gas may be discharged through an exhaust pipe.

A filter (not shown) for preventing discharge of particulate matter, for example, a HEPA filter, may be further installed in the exhaust pipe.

A plurality of UV lamps 46 may be arranged within the reaction chamber 45 and may be disposed at regular intervals within the reaction chamber 45. The UV lamp 46 may include a first lamp 7 and a second lamp 8 of different wavelengths, and the first lamp 7 and the second lamp 8 may be continuously connected in a direction in which the fluid moves.

The first ramp 7 is disposed to be relatively adjacent to the inlet 4 and the second ramp 8 is disposed to be relatively adjacent to the outlet 5.

The first lamp 7 and the second lamp 8 each have an extended shape in one direction and may be inserted in a direction perpendicular to the reaction chamber 45.

In FIG. 1, the lengths of the first lamp 7 and the second lamp 8 are installed to be the same, but the present invention is not limited thereto, and the lengths of the first lamp and the second lamp may be adjusted to be different from each other in consideration of reaction efficiency and reaction time. That is, when the first lamp and the second lamp are formed to have the same length, organic matter may not be sufficiently decomposed only by a time for which the organic matter passes through the first lamp, so the length of the first lamp may be formed to be longer than the length of the second lamp.

Each lamp includes a quartz tube 9 and a UV light source 6 inserted in the quartz tube 9. At this time, a thickness of the quartz tube 9 may be within 10 mm.

The UV lamp 46 includes a first lamp 7 and a second lamp 8 emitting different energies according to wavelengths. The second lamp 8 is a lamp having relatively higher energy than the first lamp 7. For example, the first lamp 7 may be a short wave UV (UVC) lamp and the second lamp 8 may be a middle wave UV (UVB) lamp. The UVC lamp emits a wavelength of 180 nm to 280 nm, and a the UVB lamp emits a wavelength of 280 nm to 500 nm.

The reaction chamber according to an embodiment of the present invention may be used for organic matter decomposition, and the highest reaction efficiency of organic matter decomposition may be obtained at 40 °C to 60 °C in the case of the first lamp 7. Therefore, the first lamp 7 is located in a lower portion of the reactor to obtain the highest efficiency in decomposing organic matter. A temperature of the second lamp 8 is higher than that of the first lamp 7, and a reactant temperature around the second lamp 8 may be 90 °C or higher.

A reactant may be supplied from the lower portion of the reactor and discharged to the top of the reactor, and may be circulated. Therefore, the reactant decomposed by the first lamp 7 may be heated and discharged, while passing through the second lamp 8 at 90°C or higher.

Each of the first lamp 7 and the second lamp 8 may be installed in plurality, and may be arranged at regular intervals in order to uniformly irradiate UV light to the fluid in the reaction chamber 45.

As in an embodiment of the present invention, the UV lamp may be disposed so that the reactant may pass through the first lamp 7, which is a low energy UVC lamp with high reaction efficiency, and then pass through the second lamp 8, which is a high energy UVB lamp, so that the reactant, on which the waste liquid treatment has been completed, may undergo systemic decontamination performed at high temperatures, without a separate heating process.

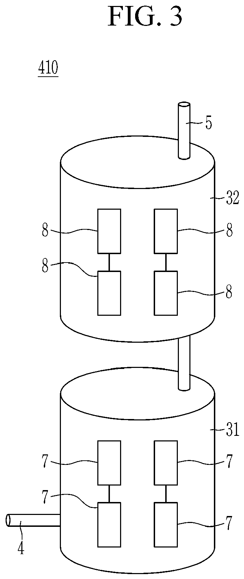

Meanwhile, the reactor 40 may further include a cooling device 401 (refer to FIG. 3), and the cooling device 401 may be located outside the reactor, may be connected to the outlet 5, and may cool the reactant discharged from the reactor 40 to an appropriate temperature. For example, the cooling device 401 may not operate when a high temperature is required, such as systemic decontamination, and may operate when waste liquid treatment requiring a relatively low temperature is performed without systemic decontamination.

The cooling device 401 may be any type as long as it may cool the reactant by heat exchange with the reactant. For example, a cooling coil (not shown) through which a refrigerant flows may be installed outside the tube through which a reactant moves.

The above reactor may be used to decompose organic acid in a solution generated in a waste liquid treatment process or a systemic decontamination process.

When the pH, Fe concentration, and hydrogen peroxide concentration are adjusted to an appropriate range to decompose the organic acid, hydrogen peroxide is decomposed by UV and a large amount of OH radicals are generated to oxidize and remove the organic acid. For example, in order to decompose organic acids of a waste liquid, the pH of the waste liquid may be maintained at 3 or less, the Fe concentration may maintained at 2 mM or less, the temperature may be maintained at 60°C or less, and the hydrogen peroxide concentration may be maintained at ~25 mM. At this time, hydrogen peroxide is injected into the system using an existing device (chemical injection tank) in the nuclear power plant system.

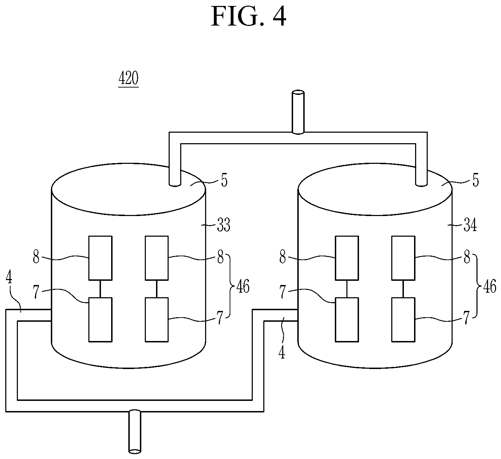

FIGS. 3 and 4 are diagrams illustrating arrangement of lamps inside a UV reactor according to another embodiment of the present invention.

Since the UV reactor shown in FIG. 3 is mostly the same as that of FIGS. 1 and 2, only different portions will be described in detail.

The UV reactors of FIGS. 3 and 4 include UVC and UVB lamps installed in a chamber.

Referring to FIG. 3, a UV reactor 410 according to another embodiment of the present invention may include a first reactor 31 and a second reactor 32, and the first reactor 31 and the second reactor 32 may be connected in series. That is, a waste liquid that has passed through the first reactor 31 may be transferred to the second reactor 32. If necessary, the waste liquid may pass through the first reactor 31 and then does not pass through the second reactor 32, or a pipe (not shown) may be connected so that the waste liquid may pass through the first reactor 31 and then flow directly into the second reactor 32 through the pipe.

Different lamps may be installed in the first reactor 31 and the second reactor 32. For example, a plurality of first lamps 7, which are relatively low-temperature UVC lamps, may be installed in the first reactor 31, and a plurality of second lamps 8, which are relatively high-temperature UVB lamps, may be installed in the second reactor 32.

The first lamps 7 of the first reactor 31 may be connected in series or parallel to each other, and the second lamps 8 of the second reactor 32 may be connected in series or parallel to each other.

In addition, as in a reactor 420 shown in FIG. 4, a third reactor 33 and a fourth reactor 34 may be connected in parallel, and the first lamp 7 and the second lamp 8 may be connected in series to the third reactor 33 and the fourth reactor 34 as in FIG. 1.

As shown in FIG. 4, when the third reactor 33 and the fourth reactor 34 are connected in parallel, if a problem occurs in one reactor, waste liquid decomposition may proceed through the other reactor.

Hereinafter, a waste liquid treatment facility including a UV reactor according to an embodiment of the present invention described above will be described with reference to the drawings.

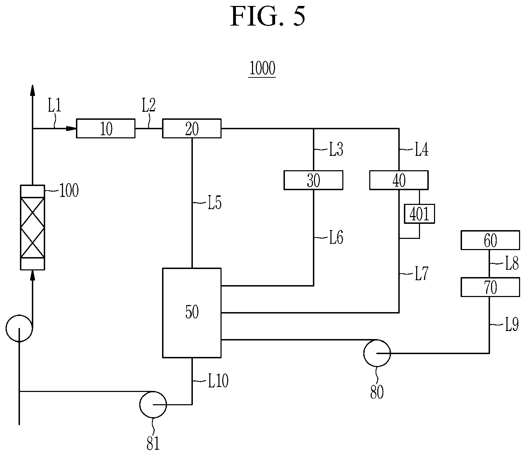

FIG. 5 is a schematic configuration diagram of a waste liquid treatment facility according to an embodiment of the present invention.

As shown in FIG. 5, a waste liquid treatment facility 1000 according to an embodiment of the present invention includes a pressure reducer 10 connected to the system 100 of a nuclear power plant, a filter 20, a demineralizer 30, a reactor 40, a buffer tank 50, an oxidizing agent preparing device 60, a chemical injection tank 70, injection pumps 80 and 81, and a circulation pipe portion connecting these components to form a circulation structure of a fluid (hereinafter, referred to as a solution).

The system 100 may be a reactor coolant system (a reactor pressure vessel, a steam generator, a pressurizer, a main pipe, etc.), a chemical and volume control system, and a residual heat removal system, and may be formed of metal including carbon steel or stainless steel. Accordingly, a metal oxide layer (chromium, iron, nickel, cobalt, etc.) may be formed on an internal surface of system 100.

The circulation pipe portion may connect the pressure reducer 10, the filter 20, the demineralizer 30, the reactor 40, the buffer tank 50, the oxidizing agent preparing device 60, the chemical injection tank 70, the injection pumps 80 and 81 to provide a circulation structure performing an organic acid decomposition and metal ion removal of a solution including radioactive materials after chemical decontamination of the system 100.

The circulation pipe portion includes a first circulation pipe L1 connected between an outlet of the system 100 and the pressure reducer 10, a second circulation pipe L2 connected between the pressure reducer 10 and the filter 20, a third circulation pipe L3 connected between the filter 20 and the demineralizer 30, a fourth circulation pipe L4 connected between the filter 20 and the reactor 40, a fifth circulation pipe L5 connected between the filter 20 and the buffer tank 50, a sixth circulation pipe L6 connected between the demineralizer 30 and the buffer tank 50, a seventh circulation pipe L7 connected between the reactor 40 and the buffer tank, an eighth circulation pipe L8 connected between the oxidizing agent preparing device 60 and the chemical injection tank 70, and a ninth circulation pipe L9 connected between the chemical injection tank 70 and the buffer tank 50, and a tenth circulation pipe L10 connected between the buffer tank 50 and the system 100.

A pump and a valve for controlling a speed and flow rate of the solution moving therein may be installed in the circulation pipe portion.

The pressure reducer 10 is for reducing pressure of the solution discharged from the system 100, and is connected to a front end of the filter 20 to reduce pressure of the solution supplied to the filter 20. For example, pressure discharged from the system 100 may be 500 psi, and pressure supplied to the filter 20 after passing through the pressure reducer 10 may be 200 psi to 250 psi.

The filter 20 is for removing particulate metal substances remaining undissolved in the waste liquid, and the filter 20 may include a plurality of filters and may include at least one preliminary filter.

Suspended matter and particulate metal substances (chromium (Cr), nickel (Ni), iron (Fe), cobalt (Co), manganese (Mn), cesium (Cs), etc.) having a size of 10 µm or more in the filter 20 may be removed by the filter 20, and the filter 20 may be a cartridge filter formed of a corrosion-resistant material and may have efficiency of removing 98% or more of particles of 10 µm or more.

The demineralizer 30 is for removing metallic ions and may include an ion exchange resin column, may include a cation exchange resin and an anion exchange resin, and may include, for example, two cation exchange resins and one anion exchange resin.

The UV reactor 40 is for decomposing organic matter in the waste liquid into H₂O and CO₂, may be the UV reactor shown in FIGS. 1 and 2, and includes a chamber and a lamp into which a waste liquid flows.

The oxidizing agent preparing device 60 is a device for preparing chemicals supplied during systemic decontamination, and may produce permanganic acid from potassium permanganate using a cation resin. Accordingly, the oxidizing agent preparing device may include a potassium permanganate tank, a strong acid cation resin column, and a potassium permanganate injection pump.

In the chemical injection tank 70, permanganic acid produced by the oxidizing agent preparing device 60 and oxalic acid used for decomposition of organic matter may be stored, and may be injected into the buffer tank 50 through the ninth circulation pipe L9. At this time, the chemical injection tank 70 includes two or more tanks to separately store an oxidizing agent and a reducing agent.

The injection pump 80 for injecting chemicals may be connected to the ninth circulation pipe L9 between the chemical injection tank 70 and the buffer tank 50, and two injection pumps 80 may be installed in consideration of multiplicity, and when one is used, the other may be in standby.

The buffer tank 50 is a tank for injecting and mixing chemicals in the waste liquid, or for discharging CO₂, and the waste liquid may be supplied from the filter 20, the demineralizer 30, and the reactor 40, or chemicals may be supplied from the chemical injection tank 70.

Meanwhile, the waste liquid of the buffer tank 50 may be supplied to the system 100 through the tenth circulation pipe L10 in which the injection pump 81 is installed, and the injection pump 81 may be a pressure boosting pump.

The injection pump 81 may be used when injecting the waste liquid and chemicals in the buffer tank 50 into the system 100, and since pressure of the system 100 is 400 psi or less, the injection pump 81 may be designed to have a higher pressure. Multiple injection pumps 81 may be designed, for example, one may be used and the other may be in standby.

Referring to the waste liquid treatment facility described above, the waste liquid may be easily treated. Hereinafter, a method of treating a waste liquid using the waste liquid treatment facility of FIG. 3 will be described.

A waste liquid according to an embodiment of the present invention is a waste liquid to be treated after systemic decontamination, and the waste liquid treatment method includes preparing a waste liquid after systemic decontamination, decomposing the waste liquid, and purifying the waste liquid.

Systemic decontamination is for removing a metal oxide layer, such as chromium, iron, and nickel formed on an internal surface of the system 100 using an oxidizing agent and a reducing agent, and permanganic acid may be used as an oxidizing agent, and an organic acid, such as oxalic acid, may be used as a reducing agent. At this time, permanganic acid may be produced through the oxidizing agent preparing device 60 of another waste liquid treatment facility according to an embodiment of the present invention, and the oxidizing agent preparing device may produce permanganic acid from potassium permanganate using a cation resin. The produced permanganic acid may be stored in the chemical injection tank 70 and supplied to the system 100 through the chemical injection pump 80 through the buffer tank 50 and the injection pump 81 during systemic decontamination. The reducing agent may also be manufactured and stored through the chemical injection tank 70.

At this time, since decontamination of the system 100 exhibits optimal reaction efficiency at a reaction temperature of 80 °C to 100 °C, it may be injected into the system 100 after being heated to the above temperature. However, when the reactor 40 according to an embodiment of the present invention is used, after being discharged from the system 100, the waste liquid is heated and discharged, while passing through the second lamp 8 of the reactor, at which time the temperature is 90 °C or more. Therefore, the waste liquid may be supplied to the system at a high temperature of 90 °C or more suitable for systemic decontamination.

Therefore, a separate device for raising the temperature of the waste liquid is not required for systemic decontamination.

If the waste liquid discharged from the reactor 40 is not used, it may be heated using a separate heater (not shown) and then supplied to the system 100.

The step of preparing the waste liquid is a pre-treatment process for satisfying waste liquid conditions for the waste liquid decomposition treatment, and may be performed according to an Fe concentration.

After the system 100 is decontaminated, when the Fe concentration of the decontamination waste liquid is ≤ 2 mM, the waste liquid decomposition process is performed, without proceeding with a waste liquid preparation step.

After the system 100 is decontaminated, if the concentration of Fe in the decontamination waste liquid is > 2 mM, the step of preparing the waste liquid is performed, followed by the step of decomposing the waste liquid.

After decontamination of the system 100, when the Fe concentration of the decontamination waste liquid is >2mM, in the step of preparing the waste liquid, the waste liquid discharged from the system 100 passes through the pressure reducer 10, the filter 20, the demineralizer 30, the buffer tank 50, and the injection pump 81 and the circulation pipes L1, L2, L3, L5, L6, and L10 connecting them, is injected into the system 100 and circulated, and may be calculated until the Fe concentration is ≤2 mM.

By the circulation, when the Fe concentration ≤ 2mM is satisfied, hydrogen peroxide is injected using an existing device (the chemical injection tank) in the power plant system, and at this time, the hydrogen peroxide concentration in the waste liquid is circulated to be uniformly distributed.

In the step of decomposing the waste liquid, after decontamination of the system 100, and the step of preparing waste liquid having Fe concentration ≤ 2mM or Fe concentration > 2mM of the decontamination waste liquid, and then injecting hydrogen peroxide into the waste liquid, organic acid is decomposed for the waste liquid in which hydrogen peroxide is uniformly included.

In the step of decomposing and treating the waste liquid, the waste liquid may pass through the pressure reducer 10, the filter 20, the reactor 40, the buffer tank 50, and the injection pump 81 from the system 100 and then injected back to the system 100 and circulated. At this time, the waste liquid may be circulated until the decomposition of the waste liquid is 95% or more.

For example, in the step of decomposing the waste liquid, oxalic acid contained in the waste liquid may be decomposed through the UV reactor of the present invention. Since an optimal reaction temperature when oxalic acid is decomposed is 50°C to 60°C, when the waste liquid is injected into the UV reactor of the present invention, oxalic acid may be effectively decomposed, while passing around the first lamp 7.

The waste liquid may flow into the reactor 40, while continuously circulating through the circulation pipe, and a concentration of oxalic acid in the waste liquid discharged from the reactor 40 is measured in real time.

When the concentration of the oxalic acid of the waste liquid discharged from the reactor 40 does not satisfy a reference value, the waste liquid may continue to be circulated through the circulation pipe. At this time, since the waste liquid discharged from the reactor 40 is discharged after passing through the second lamp unit 8, the waste liquid may be at a high temperature of 90°C or higher. Therefore, the waste liquid discharged from the reactor 40 may be cooled down to 60°C or lower by passing through the cooling device 401.

Thereafter, the temperature of the waste liquid may increase, while passing through the second lamp 8, but the temperature of the waste liquid may decrease, while passing through the cooler 401.

In addition, the first lamp 7 and the second lamp 8 may be switched on and off so that the first lamp 7 may be turned on and the second lamp 8 may be turned off during oxalic acid decomposition.

The organic acid solution according to an embodiment of the present invention may be reacted at the first temperature and the second temperature while moving from the bottom to the top of the reactor, and an optimal organic acid decomposition effect may be obtained as the temperature is changed to the first temperature and the second temperature.

The purification treatment step is to remove metal ions and residual decontaminants remaining in the waste liquid after decomposition of the waste liquid. After passing through the system 100, the pressure reducer 10, the filter 20, the demineralizer 30, the buffer tank 50, and the injection pump 81, the waste liquid may be injected back into the system 100 and circulated. At this time, the operation may be performed until the residual metal ions and the decontaminant in the waste liquid are removed.

The demineralizer 30 may include a cation exchange resin and an anion exchange resin, and the ion exchange resin may be selected according to metal ions to be removed.

Although the embodiments of the present invention have been described above, the present invention is not limited thereto, and it is possible to make various modifications and practice within the scope of the claims and the detailed description of the invention and the accompanying drawings, which may also fall within the scope of the present invention.

## Claims

1. A waste liquid treatment facility comprising:
a filter connected to a system of a nuclear power plant;
a demineralizer connected to the filter;
a reactor connected to the filter and including a first lamp and a second lamp of different wavelengths connected in succession;
a buffer tank connected to the filter, demineralizer, and reactor; and
a circulation pipe portion connecting the filter, demineralizer, reactor, and buffer tank to form a circulation structure of a solution together with the system,
wherein the solution sequentially passes through the first lamp and the second lamp.

2. The waste liquid treatment facility of claim 1, wherein:
the solution around the first lamp maintains a first temperature, and the solution around the second lamp maintains a second temperature higher than the first temperature.

3. The waste liquid treatment facility of claim 2, wherein:
the first temperature is 40 °C to 60 °C, and the second temperature is 90 °C.

4. The waste liquid treatment facility of claim 1, wherein:
the first lamp emits a wavelength of 180 nm to 280 nm, and
the second lamp emits a wavelength of 280 nm to 500 nm.

5. The waste liquid treatment facility of claim 1, wherein:
the reactor includes: a first reactor including the first lamp, and
a second reactor including the second lamp.

6. The waste liquid treatment facility of claim 1, wherein:
the reactor is installed in plurality.

7. The waste liquid treatment facility of claim 1, further comprising:
a cooling device connected to the reactor.

8. The waste liquid treatment facility of claim 1, wherein:
a length of the first lamp and a length of the second lamp are different from each other.

9. The waste liquid treatment facility of claim 1, wherein:
the circulation pipe portion includes:
a first circulation pipe connecting the system to the filter;
a second circulation pipe connecting the filter to the demineralizer;
a third circulation pipe connecting the filter to the reactor;
a fourth circulation pipe connecting each of the filter, demineralizer, and reactor to the buffer tank; and
a fifth circulation pipe connecting the buffer tank to the system.

10. The waste liquid treatment facility of claim 9, wherein:
the first lamp is located to be relatively adjacent to the third circulation pipe, and the second lamp is located to be relatively adjacent to the fourth circulation pipe.

11. The waste liquid treatment facility of claim 1, wherein:
the waste liquid supplied to the reactor has pH 3 or less, 60 °C or less, a 2mM of Fe concentration or less, and a 20mM to 25mM of hydrogen peroxide concentration.
